(19) Europäisches Patentamt
European Patent Office
Office européen des brevets

(11) EP 0 731 131 B1

(12) **EUROPEAN PATENT SPECIFICATION**

(45) Date of publication and mention of the grant of the patent:
**31.01.2001 Bulletin 2001/05**

(51) Int Cl.[7]: **C08K 3/28**, C08K 5/17, C08K 5/21, C08K 5/54

(21) Application number: **95301464.4**

(22) Date of filing: **07.03.1995**

(54) **Heat-curable silicone rubber compositions**

Wärmehärtbare Silikongummi-Zusammensetzungen

Composition de silicone caoutchouc thermo-durcissable

(84) Designated Contracting States:
**DE FR GB**

(43) Date of publication of application:
**11.09.1996 Bulletin 1996/37**

(73) Proprietor: **SHIN-ETSU CHEMICAL CO., LTD.
Chiyoda-ku Tokyo (JP)**

(72) Inventors:
- **Meguriya, Noriyuki, c/o Silicone-Elec. Mat. Lab. Matsuida-machi, Usui-gun, Gunma-ken (JP)**
- **Yoshida, Takeo, c/o Silicone-Elec. Mat. Lab. Matsuida-machi, Usui-gun, Gunma-ken (JP)**

(74) Representative: **Stoner, Gerard Patrick et al
MEWBURN ELLIS
York House
23 Kingsway
London WC2B 6HP (GB)**

(56) References cited:
**EP-A- 0 415 180**
**EP-A- 0 489 391**
**EP-A- 0 489 518**
**EP-A- 0 577 357**
**EP-A- 0 622 421**
**EP-A- 0 691 373**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to heat-curable silicone rubber compositions which cures into a silicone rubber having low compression set.

Silicone rubber compositions are well known which comprise a vinyl-containing organopolysiloxane, an organohydrogenpolysiloxane containing a hydrogen atom bonded to a silicon atom, a platinum catalyst, and an inorganic filler and which cure through addition reaction between the vinyl group and the hydrogen atom bonded to a silicon atom. Since these compositions are easy to mold and offer molded silicone rubber parts having excellent properties including heat resistance and electrical insulation, they are widely used in the application where such properties are required.

However, molded silicone rubber parts of this type are less resistant to compression as such and thus have deficiencies for molded parts which are subject to compressive deformation for a long time, for example, rolls and connectors for automotive parts. One prior art technique for overcoming this drawback is by molding parts by press molding, injection molding or transfer molding and subjecting them to heat treatment or secondary vulcanization at a high temperature of 150 to 250°C, thereby improving compression resistance. This technique is based on the belief that molded silicone rubber parts can be improved in compression resistance by reducing the amount of unreacted functional groups remaining therein. This technique is low in operation efficiency because it requires the steps of placing once molded silicone rubber parts into a hot oven and heating for a long time. The final molded parts become costly.

Therefore, it is desired to have a silicone rubber exhibiting high compression resistance without the above-mentioned problem, that is, without a need for secondary vulcanization.

JP-A-5/9388 and CA-A-2071787 disclose the addition of $NC-(CH_2)_n-CN$ to a silicone rubber composition to a silicone rubber having minimized compression set. However, because of the harmful $NC-(CH_2)_n-CN$, the resulting silicone rubber has only limited use.

JP-A-4/139258 (corresponding to CA 2052410A and EP477984A) discloses a crosslinking between an organopolysiloxane having alkenyl groups at its side chains and an organohydrogenpolysiloxane having SiH groups at both ends thereby obtaining a silicone rubber having minimized compression set. However, this would often cause an insufficient curing property and give an inferior physical property of the resulting silicone rubber.

A general aim herein is to provide new and useful silicone rubber compositions, methods of preparing and using them, and new ways of reducing compression set in addition curing rubber.

It would be desirable to achieve high compression resistance without the need for secondary vulcanization.

It would also be desirable to provide a method of vulcanizing a silicone rubber composition for providing a silicone rubber having minimized compression set without secondary vulcanization.

The present invention concerns heat-curable silicone rubber compositions comprising (a) organopolysiloxane having at least two alkenyl groups each bonded to a silicon atom in a molecule, (b) organohydrogenpolysiloxane having at least two hydrogen atoms each bonded to a silicon atom in a molecule, crosslinked using (C) platinum catalyst. We have found that by including (d) ammonia, or an ammonia precursor which will generate ammonia through thermal decomposition or chemical reaction, cured product compression set can be reduced. Preferably component (d) is added so that ammonia is present in an amount of 10 to 500 parts by weight of nitrogen per million parts by weight of the total of components (a), (b) and (c) upon vulcanization of the heat-curable silicone rubber composition.

In particular the resulting silicone rubber may have increased compression resistance without carrying out secondary vulcanization after curing.

Accordingly, one aspect of the present invention provides a heat - curable silicone rubber composition comprising

(a) organopolysiloxane having at least two alkenyl groups each bonded to a silicon atom in a molecule,
(b) organohydrogenpolysiloxane having at least two hydrogen atoms each bonded to a silicon atom in a molecule,
(c) platinum catalyst,
(d) ammonia, or ammonia precursor to generate ammonia through thermal decomposition or chemical reaction, and
(e) wet silica in an amount of 10 to 150 parts by weight per 100 parts by weight of the total of components (a) , (b) and (c),

said ammonia or ammonia precursor being blended so that ammonia is present in an amount of 10 to 200 parts by weight of nitrogen per million parts by weight of the total of components (a), (b) and (c) in a cured product of the heat - curable silicone rubber composition.

In a second aspect, the invention provides a heat - curable silicone rubber composition comprising

(a) organopolysiloxane having at least two alkenyl groups each bonded to a silicon atom in a molecule,

(b) organohydrogenpolysiloxane having at least two hydrogen atoms each bonded to a silicon atom in a molecule,
(c) platinum catalyst,
(d) ammonia, or ammonia precursor to generate ammonia through thermal decomposition or chemical reaction, and
(e) fumed silica in an amount of 10 to 150 parts by weight per 10 parts by weight of the total of components (a), (b) and (c),

said ammonia or ammonia precursor being blended so that ammonia is present in an amount of 10 to 500 parts by weight of nitrogen per million parts by weight of the total of components (a), (b) and (c) in a cured product of the heat - curable silicone rubber composition.

In a third aspect, the invention provides a method of vulcanizing a heat - curable silicone rubber composition comprising

(a) organopolysiloxane having at least two alkenyl groups each bonded to a silicon atom in a molecule,
(b) organohydrogenpolysiloxane having at least two hydrogen atoms each bonded to a silicon atom in a molecule,
(c) platinum catalyst, and
(d) wet silica in an amount of 10 to 150 parts by weight per 100 parts by weight of the total of components (a), (b) and (c),

characterized in that the composition is cured in the presence of ammonia in an amount of 10 to 200 parts by weight of nitrogen per million parts by weight of the total of components (a), (b) and (c).

In a fourth aspect, the invention provides a method of vulcanizing a heat - curable silicone rubber composition comprising

(a) organopolysiloxane having at least two alkenyl groups each bonded to a silicon atom in a molecule,
(b) organohydrogenpolysiloxane having at least two hydrogen atoms each bonded to a silicon atom in a molecule,
(c) platinum catalyst, and
(d) fumed silica in an amount of 10 to 150 parts per weight of the total of components (a), (b) and (c),

characterized in that the composition is cured in the presence of ammonia in an amount of 10 to 500 parts by weight of nitrogen per million parts by weight of the total of components (a), (b) and ) (c).

In a fifth aspect, the invention provides in a method of making an addition-cured silicone rubber from an organopolysiloxane including alkenyl moieties and an organohydrogenpolysiloxane, in the presence of platinum catalyst,

the use of ammonia or an ammonia precursor as an additive in the rubber composition at heat-curing thereof, to reduce compression set of the resulting cured rubber, the ammonia or ammonia precursor being present at curing at an amount corresponding to from 10 to 500 parts by weight of N to a million parts by weight total of said organopolysiloxane, organohydrogenpolysiloxane and catalyst.

FURTHER EXPLANATION; PREFERRED AND OPTIONAL FEATURES

The heat - curable silicone rubber composition of the present invention includes as major components (a) organopolysiloxane having at least two alkenyl groups each bonded to a silicon atom in a molecule, (b) organohydrogenpolysiloxane having at least two hydrogen atoms each bonded to a silicon atom in a molecule, and (c) platinum catalyst. Components (a), (b), and (c) may be selected from known ones.

More particularly, the organopolysiloxane as component (a) is a main component of the curable silicone rubber composition and should have at least two alkenyl groups each bonded to a silicon atom in a molecule.

Organopolysiloxane (a) preferably has the following average compositional formula (1):

$$R^1_a SiO_{(4-a)/2} \qquad (1)$$

wherein $R^1$ represents substituted or unsubstituted monovalent hydrocarbon groups, which may be identical or different, having 1 to 10 carbon atoms, preferably 1 to 8 carbon atoms, and letter a is a positive number of 1.5 to 2.8, preferably 1.8 to 2.5.

Examples of the substituted or unsubstituted monovalent hydrocarbon groups each bonded to a silicon atom in a molecule represented by $R^1$ include alkyl groups such as methyl, ethyl, propyl, isopropyl, butyl, isobutyl, tert-butyl,

pentyl, neopentyl, hexyl, cyclohexyl, octyl, nonyl and decyl, aryl groups such as phenyl, tolyl, xylyl and naphthyl, aralkyl groups such as benzyl, phenylethyl and phenylpropyl, alkenyl groups such as vinyl, allyl, propenyl, isopropenyl, butenyl, isobutenyl, hexenyl, cyclohexenyl and octenyl, and substituted ones of these groups wherein some or all of the hydrogen atoms are replaced by substituents. These substitution options are routine and a skilled person is well aware of the wide range of possibilities. Typical substituents are halogen atoms, e.g. fluorine, bromine and chlorine, and cyano groups. Examples of substituted groups are chloromethyl, chloropropyl, bromoethyl, trifluoropropyl and cyanoethyl groups.

The organopolysiloxane should have at least two alkenyl groups preferably having 2 to 8 carbon atoms, more preferably having 2 to 6 carbon atoms. The amount of alkenyl group contained is preferably $1.0 \times 10^{-5}$ to 20 mol%, more preferably $1.0 \times 10^{-4}$ to 10 mol% of the entire organic groups bonded to silicon atoms in a molecule. The aliphatic unsaturated hydrocarbon groups may be bonded to silicon atoms at the terminals or the intermediate of the chain, although the organopolysiloxane preferably has at least two alkenyl groups bonded to silicon atoms at both terminals of the chain from the viewpoint of the curing rate of the composition and the properties of the cured product.

The organopolysiloxane (a) generally has a straight chain structure basically composed of the repeated diorganosiloxane units of $R^1_2SiO_{2/2}$ and end-blocked with triorganosiloxy units of $R^1_3SiO_{1/2}$ or both ends although it may partially have branching structure, i.e. mono-organosiloxane units of $R^1SiO_{3/2}$ or may be cyclic in molecular structure. Its molecular weight is not critical. Liquid ones having a low viscosity to raw rubber-like ones having a high viscosity are acceptable although organopolysiloxanes having a viscosity of at least 100 mPa·s (100 centipoises), usually having 100 to 1 x $10^6$ mPa·s (100 to 1,000,000 centipoises), preferably 1 x $10^3$ to 1 x $10^5$ mPa·s (1,000 to 100,000 centipoises) at 25°C are preferred in order that they cure into rubbery elastomers.

The organohydrogenpolysiloxane of component (b) is a crosslinking agent for the curable silicone rubber composition of the invention. In the presence of a platinum catalyst as component (c), addition reaction occurs between a hydrogen atom bonded to a silicon atom, i.e. SiH group in component (b) and an alkenyl group bonded to a silicon atom in component (a), inducing crosslinking and curing.

The organohydrogenpolysiloxane of component (b) should have at least two, preferably 2 to 100, more preferably 3 to 50 hydrogen atoms each bonded to a silicon atom in a molecule.

The organohydrogenpolysiloxane (b) preferably has the following average compositional formula (2):

$$R^2_bH_cSiO_{(4-b-c)/2} \quad (2)$$

wherein $R^2$ represents substituted or unsubstituted monovalent hydrocarbon groups, which may be identical or different, having 1 to 10, preferably 1 to 8 carbon atoms, and letters b and c are positive numbers satisfying the following ranges: $1.5 \leqq b \leqq 2.8$, preferably $1.6 \leqq b \leqq 2.5$, $0.003 \leqq c \leqq 1.0$, preferably $0.02 \leqq c \leqq 1.0$, and $1.5 < b + c \leqq 3.0$, preferably $1.6 \leqq b + c \leqq 2.8$.

The monovalent hydrocarbon groups preferably do not have aliphatic unsaturated bonds. Examples of the substituted or unsubstituted monovalent hydrocarbon groups each bonded to a silicon atom in a molecule represented by $R^2$ can be cited as those of $R^1$ described above and include alkyl groups such as methyl, ethyl, propyl, isopropyl, butyl, isobutyl, tert-butyl, pentyl, neopentyl, hexyl, cyclohexyl, octyl, nonyl and decyl, aryl groups such as phenyl, tolyl, xylyl and naphtyl, aralkyl groups such as benzyl, phenylethyl and phenylpropyl, alkenyl groups such as vinyl, allyl, propenyl, isopropenyl, butenyl, isobutenyl, hexenyl, cyclohexenyl and octenyl, and substituted ones as aforesaid e.g. wherein some or all of the hydrogen atoms are replaced by halogen atoms, for example, fluorine, bromine and chlorine, or cyano groups, such as chloromethyl, chloropropyl, bromoethyl, trifluoropropyl and cyanoethyl groups.

The organopolysiloxane generally has a straight chain structure basically composed of the repeated difunctional siloxane units ($=SiO_{2/2}$) and having monofunctional siloxane units ($\equiv SiO_{1/2}$) at both ends although it may be a branched, cyclic or three-dimensional network structure.

The hydrogen atoms directly bonded to silicon atoms (SiH groups) may be bonded to silicon atoms at the terminal or the intermediate of the chain. Its molecular weight is not critical although it should preferably have a viscosity of 1 to 10,000 centipoises, particularly 3 to 1,000 centipoises at 25°C.

Component (b) is preferably blended such that the moles of hydrogen atom bonded to silicon atom and the moles of alkenyl group bonded to silicon atom are in a ratio of from 0.5:1 to 20:1 more preferably from 1:1 to 3:1. Curable organopolysiloxane compositions wherein less than 0.5 mole of the hydrogen atom bonded to a silicon atom is present per mole of the alkenyl group bonded to a silicon atom may not thoroughly cure. Curable organopolysiloxane compositions wherein more than 20 moles of the hydrogen atom bonded to a silicon atom is present per mole of the alkenyl group bonded to a silicon atom may expand.

Component (c) is a platinum catalyst for curing the curable silicone rubber composition. These may be conventional: examples include chloroplatinic acid, alcohol solutions of chloroplatinic acid, complexes of chloroplatinic

acid with olefins, platinum black, and platinum carried on supports. The platinum catalyst is preferably added such that there is available 0.1 to 500 parts, more preferably 1 to 50 parts by weight of platinum per million parts by weight of components (a) and (b) combined. Less than 0.1 ppm of platinum may be insufficient for curing to proceed whereas more than 500 ppm of platinum is uneconomical.

According to our present proposals component (d), ammonia or an ammonia precursor which will generate ammonia through thermal decomposition or chemical reaction is blended in a silicone rubber composition comprising components (a), (b), and (c). The ammonia or ammonia precursor is blended in such amounts ($NH_3$ being otherwise a poison to the catalyst for addition reaction) that it functions to reduce compression set without destroying curability. The component (d) is preferably blended so as to be present in an amount of 10 to 500 parts, more preferably 20 to 200 parts by weight calculated as nitrogen per million parts by weight of components (a), (b) and (c) combined in the cured product of the composition.

Any ammonia precursor which will generate ammonia through thermal decomposition or chemical reaction within the system may be used. Typical examples are inorganic ammonium salts such as ammonium acetate, ammonium chloride, ammonium hydroxide, ammonium sulfate, and ammonium carbonate, organic nitrogen compounds such as urea, organosilazane compounds, for example, organodisilazanes such as hexamethyldisilazane and divinyltetramethyldisilazane.

In addition to the above components, the silicone rubber composition may have blended therein any of various additives which e.g. as conventionally blended in this type of composition.

Typically, a filler such as pulverized quartz, diatomaceous earth, calcium carbonate, alumina, carbon black and reinforcing silica powder can be blended in order to impart strength to a silicone rubber. Examples of reinforcing fillers include hydrophilic silicas such as Aerosil® 130, 200 and 300 manufactured by Japan Aerosil K.K. and Degussa, Cabosil® MS-5 and MS-7 manufactured by Cabot, Rheorosil® QS-102 and 103 manufactured by Tokuyama Sada K. K. and Nipsil® LP manufactured by Nippon Silica K.K., and hydrophobic silicas such as Aerosil® R-812, R-812S, R-972 and R-974 manufactured by Degussa, Rheorosil® MT-10 manufactured by Tokuyama Soda K.K. and Nipsil® SS series manufactured by Nippon Silica K.K.

The filler may be blended in an amount of 10 to 150 parts by weight per 100 parts by weight of components (a), (b) and (c) combined.

An agent for controlling curing time may also be blended. Examples of the control agent include vinyl group-containing organopolysiloxane (such as vinylcyclotetrasiloxane), triallylisocyanurate, alkyl maleate, acetylene alcohol (such as ethynylcyclohexanol), silane or siloxane-modified acetylene alcohol, hydroperoxide, tetramethyl ethylenediamine, benzotriazole and mixtures thereof.

Colouring agents such as inorganic pigments (such as cobalt blue) and organic dyes, flame retardants (such as cerium oxide, zinc carbonate, manganese carbonate, red oxide and titanium oxide) may be optionally blended.

The silicone rubber composition may be prepared in a generally conventional manner, ammonia or ammonia precursor being added at any stage.

Typically such a silicone rubber composition is prepared by at first mixing the organopolysiloxane (a) and a filler for 10 minutes to 8 hours at from room temperature (for example, 10 to 30°C) to 280°C, preferably 80 to 200°C and then adding to the mixture the organohydrogenpolysiloxane (b) and the platinum catalyst (c) at room temperature (usually 10 to 30°C). Ammonia or the ammonia precursor is added with the organosiloxane (a) and the filler or with the organohydrogenpolysiloxane (b) and the platinum catalyst (c). In the former case, ammonia or ammonia precursor may be added in a larger amount (over 10 to 500 ppm as nitrogen atom per the total amount of components (a), (b) and (c)) because ammonia would be evaporated away in the mixing step for 10 minutes to 8 hours at from room temperature (for example, 10 to 30°C) to 280°C, preferably 80 to 200°C. Ammonia or ammonia precursor may also be added to the composition prepared including components (a), (b) and (c) as well as the filler or other agents, before curing.

Ammonia is preferably present in an amount of 10 to 500 ppm as nitrogen atom in the composition at the curing step, to prepare a cured product (silicone rubber) having low compression set without a need for secondary vulcanization. If ammonia is over that upper value, curing may be adversely affected. If the amount of ammonia is lower than the lower value, the desired technical effect may be insignificant. However, empirical variations may be exploited.

The silicone rubber composition is generally cured by primarily vulcanizing at room temperature, for example, 10 to 30°C to about 250°C for about ten seconds to about 120 minutes. The resulting cured product has a low compression set without secondary vulcanization. This eliminates a need for secondary vulcanization after curing.

There has been described a heat-curable silicone rubber composition which can be molded and cured into silicone rubber parts having low compression set, without secondary vulcanization. The resulting silicone rubber parts are well suited as roll members, connectors for automotive parts, packing keyboards on microwave ovens and microwave jars, watch parts, camera parts, and O-rings.

EXAMPLE

Examples are given below by way of illustration and not by way of limitation. All parts are by weight.

Example 1

A liquid silicone rubber base was prepared by agitating 100 parts of a dimethylpolysiloxane (A) blocked with a dimethylvinylsiloxy group at either end and having a viscosity of 1 x $10^4$ $mm^2/s$ (10,000 centistokes) at 25°C, 40 parts of wet silica (Nipsil LP®, Nippon Silica Industry K.K.), 3 parts of hexamethyldisilazane, and 1 part of water in a kneader mixer at room temperature, i.e. at 25°C for 1 hour, then heating to an internal temperature of 150°C, and continuing agitation for a further 3 hours.

To 100 parts of the liquid silicone rubber base were added 30 parts of the same dimethylpolysiloxane (A) as above, 1.1 parts of a methylhydrogenpolysiloxane consisting of dimethylsiloxane-methylhydrogensiloxane copolymer (B) of the following formula having a viscosity of 15 centistokes at 25°C as a crosslinking agent, 0.1 part of a 1% isopropyl alcohol solution of chloroplatinic acid, and 0.05 part of ethynyl cyclohexanol as a reaction control agent. The ingredients were uniformly mixed.

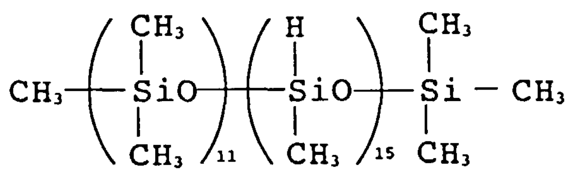

...(B)

The composition was cured at 150°C while being examined for curing using a rheometer. The results are shown in Table 1. T10 and T90 are times taken until the torque reaches 10% and 90% of the torque recorded after 2 minutes of curing, respectively. Separately, the composition was press molded at 120°C for 10 minutes into a rubber sheet of 2 mm gage. The rubber sheet was measured for residual nitrogen and various physical properties. The sheet was subject to a compression set test at 150°C for 22 hours according to JIS K-6301. The results are also shown in Table 1.

Example 2

A liquid silicone rubber base was prepared by agitating 100 parts of a dimethylpolysiloxane blocked with a dimethylvinylsiloxy group at either end and having a viscosity of 1 x $10^4$ $mm^2/s$ (10,000 centistokes) at 25°C, 40 parts of wet silica (Nipsil LP), and 3 parts of 29% aqueous ammonia in a kneader mixer at room temperature, i.e. at 25°C for 1 hour, then heating to an internal temperature of 150°C, and continuing agitation for a further 3 hours. To 100 parts of the liquid silicone rubber base were added 300 parts of the dimethylpolysiloxane (A) used in Example 1, 1.1 parts of methylhydrogenpolysiloxane (B), 0.1 part of a 1% isopropyl alcohol solution of chloroplatinic acid, and 0.05 part of ethynyl cyclohexanol as a reaction control agent. There was obtained an addition type silicone rubber composition.

The composition was tested as in Example 1, with the results shown in Table 1.

Example 3

A liquid silicone rubber base was prepared by combining 100 parts of a dimethylpolysiloxane blocked with a dimethylvinylsiloxy group at either end and having a viscosity of 10,000 centistokes at 25°C with 40 parts of wet silica (Nipsil LP), 3 parts of dimethoxydimethylsilane, and 1 part of water and agitating the ingredients in a kneader mixer as in Example 1. To 100 parts of the liquid silicone rubber base were added 30 parts of the dimethylpolysiloxane (A) used in Example 1, 1.1 parts of methylhydrogenpolysiloxane (B), 0.1 part of a 1% isopropyl alcohol solution of chloroplatinic acid, and 0.05 part of ethynyl cyclohexanol as a reaction control agent. Thereafter, 0.0045 part of 29% aqueous ammonia was added thereto, obtaining an addition type silicone rubber composition.

The composition was tested as in Example 1, with the results shown in Table 1.

Example 4

A liquid silicone rubber base was prepared by combining 100 parts of a dimethylpolysiloxane blocked with a dimethylvinylsiloxy group at either end and having a viscosity of 10,000 centistokes at 25°C with 40 parts of wet silica (Nipsil LP), 3 parts of dimethoxydimethylsilane, 1 part of water, and 5 parts of ammonium carbonate and agitating the ingredients in a kneader mixer as in Example 1. To 100 parts of the liquid silicone rubber base were added 30 parts of the dimethylpolysiloxane (A) used in Example 1, 1.1 parts of methylhydrogenpolysiloxane (B), 0.1 part of a 1% isopropyl alcohol solution of chloroplatinic acid, and 0.05 part of ethynyl cyclohexanol as a reaction control agent. There was obtained an addition type silicone rubber composition.

The composition was tested as in Example 1, with the results shown in Table 1.

Example 5

A liquid silicone rubber base was prepared by agitating 100 parts of a dimethylpolysiloxane blocked with a dimethylvinylsiloxy group at either end and having a viscosity of 1 x $10^4$ $mm^2/s$ (10,000 centistokes) at 25°C with 40 parts of fumed silica having a specific surface area of 200 $m^2/g$, 6 parts of hexamethyldisilazane, and 2 parts of water in a kneader mixer at room temperature, i.e. at 25°C for 1 hour, then heating to an internal temperature of 150°C, and continuing agitation for a further 3 hours. To the mixture was added 2 parts of aqueous ammonia. With agitation continued, the mixture was cooled down to room temperature. To 100 parts of the liquid silicone rubber base were added 30 parts of the dimethylpolysiloxane (A) used in Example 1, 1.1 parts of methylhydrogenpolysiloxane copolymer (B), 0.1 part of a 1% isopropyl alcohol solution of chloroplatinic acid, and 0.05 part of ethynyl cyclohexanol as a reaction control agent. There was obtained an addition type silicone rubber composition.

The composition was tested as in Example 1, with the results shown in Table 1.

Example 6

A liquid rubber compound base was prepared by mixing 100 parts of a dimethylpolysiloxane blocked with a dimethylvinylsiloxy group at either end and having a viscosity of 10,000 centistokes at 25°C with 40 parts of wet silica (Nipsil LP), 1.5 parts of hexamethyldisilazane, and 0.5 part of water in a Henschel mixer for 10 minutes, transferring the mixture to a twin roll continuous milling extruder, and extruding at an internal temperature of 200°C for a residence time of 80 to 100 seconds. A crosslinking agent, catalyst and reaction control agent were added to the liquid rubber compound base as in Example 1, obtaining an addition type silicone rubber composition.

The composition was tested as in Example 1, with the results shown in Table 1.

Comparative Example 1

A rubber compound base was prepared by agitating 100 parts of a dimethylpolysiloxane blocked with a dimethylvinylsiloxy group at either end and having a viscosity of 1 x $10^4$ $mm^2/s$ (10,000 centistokes) at 25°C, 40 parts of wet silica (Nipsil LP), 3 parts of dimethoxydimethylsilane, and 1 part of water in a kneader mixer at room temperature, i.e. at 25°C for 1 hour, then heating to an internal temperature of 150°C, and continuing agitation for a further 3 hours. To 100 parts of the rubber compound base were added 30 parts of the dimethylpolysiloxane (A) used in Example 1, 1.1 parts of methylhydrogenpolysiloxane (B), 0.1 part of a 1% isopropyl alcohol solution of chloroplatinic acid, and 0.05 part of ethynyl cyclohexanol as a reaction control agent. There was obtained an addition type silicone rubber composition.

The composition was tested as in Example 1, with the results shown in Table 1.

Comparative Example 2

A liquid rubber compound base was prepared by agitating 100 parts of a dimethylpolysiloxane blocked with a dimethylvinylsiloxy group at either end and having a viscosity of 1 x $10^4$ $mm^2/s$ (10,000 centistokes) at 25°C, 40 parts of wet silica (Nipsil LP), 3 parts of hexamethyldisilazane, and 1 part of water in a kneader mixer at room temperature, i.e. at 25°C for 1 hour, then heating to an internal temperature of 110 °C, and continuing agitation at 100°C for a further 1 hour.

To 100 parts of the liquid rubber compound base were added 30 parts of the dimethylpolysiloxane (A) used in Example 1, 1.1 parts of methylhydrogenpolysiloxane (B), 0.1 part of a 1% isopropyl alcohol solution of chloroplatinic acid, and 0.05 part of ethynyl cyclohexanol as a reaction control agent. There was obtained an addition type silicone rubber composition.

The composition was tested as in Example 1, with the results shown in Table 1.

Comparative Example 3

A liquid rubber compound base was prepared by agitating 100 parts of a dimethylpolysiloxane blocked with a dimethylvinylsiloxy group at either end and having a viscosity of 1 x $10^4$ $mm^2/s$ (10,000 centistokes) at 25°C, 40 parts of wet silica (Nipsil LP), 3 parts of hexamethyldisilazane, and 1 part of water in a kneader mixer at room temperature, i.e. at 25°C for 1 hour, then heating to an internal temperature of 150°C, and continuing agitation for a further 18 hours.
To 100 parts of the liquid rubber compound base were added 30 parts of the dimethylpolysiloxane (A) used in Example 1, 1.1 parts of methylhydrogenpolysiloxane (B), 0.1 part of a 1% isopropyl alcohol solution of chloroplatinic acid, and 0.05 part of ethynyl cyclohexanol as a reaction control agent. There was obtained an addition type silicone rubber composition.
The composition was tested as in Example 1, with the results shown in Table 1.

Comparative Example 4

A liquid rubber compound base was prepared by adding 40 parts of fumed silica having a specific surface area of 200 $m^2/g$, 6 parts of hexamethyldisilazane, and 2 parts of water to 100 parts of a dimethylpolysiloxane blocked with a dimethylvinylsiloxy group at either end and having a viscosity of 1 x $10^4$ $mm^2/s$ (10,000 centistokes) at 25°C, agitating the ingredients at room temperature, i.e. at 25°C for 1 hour, then heating to temperature of 150°C, and continuing agitation for a further 3 hours.
To 100 parts of the liquid rubber compound base were added 30 parts of the dimethylpolysiloxane (A) used in Example 1, 1.1 parts of methylhydrogenpolysiloxane (B), 0.1 part of a 1% isopropyl alcohol solution of chloroplatinic acid, and 0.05 part of ethynyl cyclohexanol as a reaction control agent. There was obtained an addition type silicone rubber composition.
The composition was tested as in Example 1, with the results shown in Table 1.

Comparative Example 5

A rubber compound base was prepared by charging a kneader mixer with 80 parts of a dimethylpolysiloxane blocked with a trivinylsiloxy group at either end and having a viscosity of 1 x $10^4$ $mm^2/s$ (10,000 centistokes) at 25°C, 20 parts of a dimethylpolysiloxane blocked with a dimethylvinylsiloxy group at either end and having a viscosity of 10,000 centistokes at 25°C, 40 parts of wet silica (Nipsil LP), 3 parts of hexamethyldisilazane, and 1 part of water, agitating the ingredients at room temperature, i.e. at 25°C for 1 hour, then heating to a temperature of 150°C, and continuing agitation for a further 3 hours. To 100 parts of the rubber compound base were added 30 parts of the dimethylpolysiloxane (A) used in Example 1 and 0.6 part of t-butylperoxyisopropyl carbonate, obtaining a peroxide curing type silicone rubber composition.
The composition was tested as in Example 1, with the results shown in Table 1.

Comparative Example 6

Comparative Example 5 was repeated except that hexamethyldisilazane was replaced by dimethoxydimethylsilane.
The composition was tested as in Example 1, with the results shown in Table 1.
From the examples it will be noted that the ammonia content at curing showed significant dependency on the mixing time and temperature, starting from a given preliminary mixture composition. Compare e.g. Example 1 with Comparative Examples 2 and 3. The nitrogen content is not difficult to determine, however, so mixing temperature and time for a desired ammonia content can correspondingly be determined without difficulty.

Table 1

| | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Curability | T10 (sec.) | 24 | 27 | 26 | 25 | 26 | 27 | 25 | 31 | 26 | 22 | 41 | 43 |
| | T90 (sec.) | 39 | 40 | 41 | 42 | 35 | 44 | 40 | 62 | 40 | 33 | 86 | 85 |
| Hardness JIS A scale | | 48 | 50 | 52 | 49 | 41 | 53 | 52 | 52 | 48 | 41 | 51 | 53 |
| Tensile strength ($kgf/cm^2$) | | 70 | 62 | 58 | 61 | 89 | 60 | 59 | 61 | 72 | 90 | 72 | 61 |
| Elongation (%) | | 320 | 280 | 250 | 280 | 500 | 220 | 240 | 250 | 310 | 520 | 320 | 250 |
| Compression set (%) | | 13 | 15 | 19 | 16 | 20 | 16 | 36 | 39 | 35 | 48 | 29 | 31 |
| Residual N in the cured product (ppm) | | 80 | 60 | 110 | 50 | 120 | 180 | 1 > | 700 | 8 | 4 | 60 | 1 > |
| Residual N (ppm) per the total weight of components (a), (b) and (c) after curing | | 63 | 47 | 86 | 39 | 94 | 141 | 1 > | 547 | 6 | 3 | 47 | 1 > |

## Claims

1. A heat - curable silicone rubber composition comprising

   (a) organopolysiloxane having at least two alkenyl groups each bonded to a silicon atom in a molecule,
   (b) organohydrogenpolysiloxane having at least two hydrogen atoms each bonded to a silicon atom in a molecule,
   (c) platinum catalyst,
   (d) ammonia, or ammonia precursor to generate ammonia through thermal decomposition or chemical reaction, and
   (e) wet silica in an amount of 10 to 150 parts by weight per 100 parts by weight of the total of components (a), (b) and (c),

   said ammonia or ammonia precursor being blended so that ammonia is present in an amount of 10 to 200 parts by weight of nitrogen per million parts by weight of the total of components (a), (b) and (c) in a cured product of the heat - curable silicone rubber composition.

2. A heat - curable silicone rubber composition of claim 1 wherein ammonia or ammonia precursor is blended so that ammonia is present in an amount of at least 20 parts by weight of nitrogen per million parts by weight of the total of components (a), (b) and (c) in the cured product of the heat - curable silicone rubber composition.

3. A heat - curable silicone rubber composition comprising

   (a) organopolysiloxane having at least two alkenyl groups each bonded to a silicon atom in a molecule,
   (b) organohydrogenpolysiloxane having at least two hydrogen atoms each bonded to a silicon atom in a molecule,
   (c) platinum catalyst,
   (d) ammonia, or ammonia precursor to generate ammonia through thermal decomposition or chemical reaction, and
   (e) fumed silica in an amount of 10 to 150 parts by weight per 10 parts by weight of the total of components (a) , (b) and (c),

   said ammonia or ammonia precursor being blended so that ammonia is present in an amount of 10 to 500 parts by weight of nitrogen per million parts by weight of the total of components (a), (b) and (c) in a cured product of the heat - curable silicone rubber composition.

4. A heat - curable silicone rubber composition or claim 3 wherein ammonia or ammonia precursor is blended so that ammonia is present in an amount of 20 to 200 parts by weight of nitrogen per million parts by weight of the total of components (a), (b) and (c) in the cured product of the heat - curable silicone rubber composition.

5. A method of vulcanizing a heat - curable silicone rubber composition comprising

   (a) organopolysiloxane having at least two alkenyl groups each bonded to a silicon atom in a molecule,
   (b) organohydrogenpolysiloxane having at least two hydrogen atoms each bonded to a silicon atom in a molecule,
   (c) platinum catalyst, and
   (d) wet silica in an amount of 10 to 150 parts by weight per 100 parts by weight of the total of components (a), (b) and (c),

   characterized in that the composition is cured in the presence of ammonia in an amount of 10 to 200 parts by weight of nitrogen per million parts by weight of the total of components (a), (b) and (c).

6. A method of claim 5 wherein the composition is cured in the presence of ammonia in an amount of at least 20 parts by weight of nitrogen per million parts by weight of the total of components (a), (b) and (c).

7. A method of vulcanizing a heat - curable silicone rubber composition comprising

   (a) organopolysiloxane having at least two alkenyl groups each bonded to a silicon atom in a molecule,

(b) organohydrogenpolysiloxane having at least two hydrogen atoms each bonded to a silicon atom in a molecule,
(c) platinum catalyst, and
(d) fumed silica in an amount of 10 to 150 parts per weight of the total of components (a), (b) and (c), characterized in that the composition is cured in the presence of ammonia in an amount of 10 to 500 parts by weight of nitrogen per million parts by weight of the total of components (a), (b) and ) (c).

**8.** A method of claim 7 wherein the composition is cured in the presence of ammonia in an amount of 20 to 200 parts by weight of nitrogen per million parts by weight of the total of components (a), (b) and (c).

**9.** A method according to any of claims 5 to 8 which does not include secondary vulcanization.

**10.** Use of ammonia or an ammonia precursor as an additive at heat-curing of an addition cured silicone rubber from an organopolysiloxane including alkenyl moieties and an organohydrogenpolysiloxane, in the presence of platinum catalyst, to reduce compression set of the resulting cured rubber, the ammonia or ammonia precursor being present at curing at an amount corresponding to from 10 to 500 parts by weight of N to a million parts by weight total of said organopolysiloxane, organohydrogenpolysiloxane and catalyst.

**11.** Use according to claim 10 in which the ammonia or ammonia precursor is blended as ammonia, as an inorganic ammonium salt, as an organic nitrogen compound or as an organosilazane.

**Patentansprüche**

**1.** Wärmehärtbare Silikonkautschuk-Zusammensetzung, umfassend:

(a) Organopolysiloxan, das pro Molekül zumindest zwei jeweils an ein Siliziumatom gebundene Alkenylgruppen aufweist,
(b) Organohydrogenpolysiloxan, das pro Molekül zumindest zwei jeweils an ein Siliziumatom gebundene Wasserstoffatome aufweist,
(c) Platin-Katalysator,
(d) Ammoniak oder Ammoniak-Vorläufer zur Ammoniak-Erzeugung durch thermische Zersetzung oder chemische Reaktion, sowie
(e) nach einem Nassverfahren erzeugte Kieselsäure in einer Menge von 10 bis 150 Gewichtsteilen pro 100 Gewichtsteile der Gesamtmenge der Komponenten (a), (b) und (c),

wobei der Ammoniak oder Ammoniak-Vorläufer so eingemischt ist, dass in einem gehärteten Produkt aus der wärmehärtbaren Silikonkautschuk-Zusammensetzung Ammoniak in einer Menge von 10 bis 200 Gewichtsteilen Stickstoff pro Million Gewichtsteile der Gesamtmenge der Komponenten (a), (b) und (c) vorhanden ist.

**2.** Wärmehärtbare Silikonkautschuk-Zusammensetzung nach Anspruch 1, worin Ammoniak oder Ammoniak-Vorläufer so eingemischt ist, dass im gehärteten Produkt aus der wärmehärtbaren Silikonkautschuk-Zusammensetzung Ammoniak in einer Menge von zumindest 20 Gewichtsteilen Stickstoff pro Million Gewichtsteile der Gesamtmenge der Komponenten (a), (b) und (c) vorhanden ist.

**3.** Wärmehärtbare Silikonkautschuk-Zusammensetzung, umfassend:

(a) Organopolysiloxan, das pro Molekül zumindest zwei jeweils an ein Siliziumatom gebundene Alkenylgruppen aufweist,
(b) Organohydrogenpolysiloxan, das pro Molekül zumindest zwei jeweils an ein Siliziumatom gebundene Wasserstoffatome aufweist,
(c) Platin-Katalysator,
(d) Ammoniak oder Ammoniak-Vorläufer zur Ammoniak-Erzeugung durch thermische Zersetzung oder chemische Reaktion, sowie
(e) Kieselsäurerauch in einer Menge von 10 bis 150 Gewichtsteilen pro 10 Gewichtsteile der Gesamtmenge der Komponenten (a), (b) und (c),

wobei der Ammoniak oder Ammoniak-Vorläufer so eingemischt ist, dass in einem gehärteten Produkt aus

der wärmehärtbaren Silikonkautschuk-Zusammensetzung Ammoniak in einer Menge von 10 bis 500 Gewichtsteilen Stickstoff pro Million Gewichtsteile der Gesamtmenge der Komponenten (a), (b) und (c) vorhanden ist.

**4.** Wärmehärtbare Silikonkautschuk-Zusammensetzung nach Anspruch 3, worin Ammoniak oder Ammoniak-Vorläufer so eingemischt ist, dass im gehärteten Produkt aus der wärmehärtbaren Silikonkautschuk-Zusammensetzung Ammoniak in einer Menge von 20 bis 200 Gewichtsteilen Stickstoff pro Million Gewichtsteile der Gesamtmenge der Komponenten (a), (b) und (c) vorhanden ist.

**5.** Verfahren zum Vulkanisieren einer wärmehärtbaren Silikonkautschuk-Zusammensetzung, umfassend:

(a) Organopolysiloxan, das pro Molekül zumindest zwei jeweils an ein Siliziumatom gebundene Alkenylgruppen aufweist,
(b) Organohydrogenpolysiloxan, das pro Molekül zumindest zwei jeweils an ein Siliziumatom gebundene Wasserstoffatome aufweist,
(c) Platin-Katalysator und
(d) nach einem Nassverfahren erzeugte Kieselsäure in einer Menge von 10 bis 150 Gewichtsteilen pro 100 Gewichtsteile der Gesamtmenge der Komponenten (a), (b) und (c),

dadurch gekennzeichnet, dass die Zusammensetzung in Gegenwart von Ammoniak in einer Menge von 10 bis 200 Gewichtsteilen Stickstoff pro Million Gewichtsteile der Gesamtmenge der Komponenten (a), (b) und (c) gehärte wird.

**6.** Verfahren nach Anspruch 5, worin die Zusammensetzung in Gegenwart von Ammoniak in einer Menge von zumindest 20 Gewichtsteilen Stickstoff pro Million Gewichtsteile der Gesamtmenge der Komponenten (a), (b) und (c) gehärtet wird.

**7.** Verfahren zum Vulkanisieren einer wärmehärtbaren Silikonkautschuk-Zusammensetzung, umfassend

(a) Organopolysiloxan, das pro Molekül zumindest zwei jeweils an ein Siliziumatom gebundene Alkenylgruppen aufweist,
(b) Organohydrogenpolysiloxan, das pro Molekül zumindest zwei jeweils an ein Siliziumatom gebundene Wasserstoffatome aufweist,
(c) Platin-Katalysator und
(d) Kieselsäurerauch in einer Menge von 10 bis 150 Gewichtsteilen, bezogen auf die Gesamtmenge der Komponenten (a), (b) und (c), dadurch gekennzeichnet, dass die Zusammensetzung in Gegenwart von Ammoniak in einer Menge von 10 bis 500 Gewichtsteilen Stickstoff pro Million Gewichtsteile der Gesamtmenge der Komponenten (a), (b) und (c) gehärtet wird.

**8.** Verfahren nach Anspruch 7, worin die Zusammensetzung in Gegenwart von Ammoniak in einer Menge von 20 bis 200 Gewichtsteilen Stickstoff pro Million Gewichtsteile der Gesamtmenge der Komponenten (a), (b) und (c) gehärtet wird.

**9.** Verfahren nach einem der Ansprüche 5 bis 8, das keine sekundäre Vulkanisation umfasst.

**10.** Verwendung von Ammoniak oder eines Ammoniak-Vorläufers als Additiv zum Heißhärten eines additionsgehärteten Silikonkautschuks aus einem Organopolysiloxan, das Alkenylgruppen umfasst, und einem Organohydrogenpolysiloxan in Gegenwart von Platin-Katalysator, um die Druckverformung des resultierenden gehärteten Gummis zu verringern, wobei der Ammoniak oder Ammoniak-Vorläufer bei der Härtung in einer Menge vorhanden ist, die 10 bis 500 Gewichtsteilen N pro Million Gewichtsteile der Gesamtmenge an Organopolysiloxan, Organohydrogenpolysiloxan und Katalysator entspricht.

**11.** Verwendung nach Anspruch 10, wobei der Ammoniak oder Ammoniak-Vorläufer als Ammoniak, als anorganisches Ammoniumsalz, als organische Stickstoffverbindung oder als Organosilazan eingemischt wird.

## Revendications

**1.** Composition de caoutchouc de silicone thermodurcissable comprenant

(a) un organopolysiloxane ayant au moins deux groupes alcényle chacun lié à un atome de silicium dans une molécule.
(b) un organohydrogénopolysiloxane ayant au moins deux atomes d'hydrogène, chacun lié à un atome de silicium dans une molécule,
(c) un catalyseur de platine,
(d) de l'ammoniaque, ou un précurseur d'ammoniaque pour générer de l'ammoniaque par décomposition thermique ou réaction chimique,
(e) de la silice mouillée en une quantité de 10 à 150 parties en poids pour 100 parties en poids du total des composants (a), (b) et (c),

ladite ammoniaque ou ledit précurseur d'ammoniaque étant mélangé de façon que l'ammoniaque soit présente en une quantité de 10 à 200 parties en poids d'azote par million de parties en poids du total des composants (a), (b) et (c) dans un produit durci de la composition de caoutchouc de silicone thermodurcissable.

**2.** Composition de caoutchouc de silicone thermodurcissable de la revendication 1, où l'ammoniaque ou le précurseur d'ammoniaque est mélangé de façon que l'ammoniaque soit présente en une quantité d'au moins 20 parties en poids d'azote par million de parties en poids du total des composants (a), (b) et (c) dans un produit durci de la composition de caoutchouc de silicone thermodurcissable.

**3.** Composition de caoutchouc de silicone thermodurcissable comprenant

(a) un organopolysiloxane ayant au moins deux groupes alcényle chacun lié à un atome de silicium dans une molécule,
(b) un organohydrogénopolysiloxane ayant au moins deux atomes d'hydrogène, chacun lié à un atome de silicium dans une molécule,
(c) un catalyseur de platine,
(d) de l'ammoniaque, ou un précurseur d'ammoniaque pour générer de l'ammoniaque par décomposition thermique ou réaction chimique,
(e) de la silice fumée en une quantité de 10 à 150 parties en poids pour 10 parties en poids du total des composants (a), (b) et (c),

ladite ammoniaque ou ledit précurseur d'ammoniaque étant mélangé de façon que l'ammoniaque soit présente en une quantité de 10 à 200 parties en poids d'azote par million de parties en poids du total des composants (a), (b) et (c) dans un produit durci de la composition de caoutchouc de silicone thermodurcissable.

**4.** Composition de caoutchouc de silicone thermodurcissable de la revendication 3, où l'ammoniaque ou le précurseur d'ammoniaque est mélangé de façon que l'ammoniaque soit présente en une quantité de 20 à 200 parties en poids d'azote par million de parties en poids du total des composants (a), (b) et (c) dans le produit durci de la composition de caoutchouc de silicone thermodurcissable.

**5.** Méthode de vulcanisation d'une composition de caoutchouc de silicone thermodurcissable comprenant

(a) un organopolysiloxane ayant au moins deux groupes alcényle, chacun lié à un atome de silicium dans une molécule,
(b) un organohydrogénopolysiloxane ayant au moins deux atomes d'hydrogène, chacun lié à un atome de silicium dans une molécule,
(c) un catalyseur de platine et
(d) de la silice mouillée en une quantité de 10 à 150 parties en poids pour 100 parties en poids du total des composants (a), (b) et (c),

caractérisée en ce que la composition est durcie en présence d'ammoniaque en une quantité de 10 à 200 parties en poids d'azote par million de parties en poids du total des composants (a), (b) et (c).

**6.** Méthode de la revendication 5, où la composition est durcie en présence d'ammoniaque en une quantité d'au moins 20 parties en poids d'azote par million de parties en poids du total des composants (a), (b) et (c).

**7.** Méthode de vulcanisation d'une composition de caoutchouc de silicone thermodurcissable comprenant

(a) un organopolysiloxane ayant au moins deux groupes alcényle, chacun lié à un atome de silicium dans une molécule,
(b) un organohydrogénopolysiloxane ayant au moins deux atomes d'hydrogène, chacun lié à un atome de silicium dans une molécule,
(c) un catalyseur de platine, et
(d) de la silice fumée en une quantité de 10 à 150 parties en poids du total des composants (a), (b) et (c),
caractérisée en ce que la composition est durcie en présence d'ammoniaque en une quantité de 10 à 500 parties en poids d'azote par million de parties en poids du total des composants (a), (b) et (c).

**8.** Méthode de la revendication 7, où la composition est durcie en présence d'ammoniaque en une quantité de 20 à 200 parties en poids d'azote par million de parties en poids du total des composants (a), (b) et (c).

**9.** Méthode selon l'une quelconque des revendications 5 à 8, qui ne comprend pas de vulcanisation secondaire.

**10.** Utilisation d'ammoniaque ou d'un précurseur d'ammoniaque en tant qu'additif pour le thermodurcissement d'un caoutchouc de silicone durci par addition à partir d'un organopolysiloxane comprenant des fractions alcényles et d'un organohydrogénopolysiloxane, en présence d'un catalyseur de platine, pour réduire la déformation permanente à la compression du caoutchouc durci résultant, l'ammoniaque ou le précurseur d'ammoniaque étant présent au durcissement en une quantité correspondant à 10 à 500 parties en poids de N par million de parties en poids du total desdits organopolysiloxane, organohydrogénopolysiloxane et catalyseur.

**11.** Utilisation selon la revendication 10, où l'ammoniaque ou le précurseur d'ammoniaque est mélangé en tant qu'ammoniaque, en tant que sel d'ammonium inorganique ou en tant que composé d'azote organique ou en tant qu'organosilazane.